# EUROPÄISCHE PATENTSCHRIFT

(11) **EP 1 149 321 B1**
(45) Veröffentlichungstag und Bekanntmachung des Hinweises auf die Patenterteilung: **03.07.2002**
(21) Anmeldenummer: 00912351.4
(22) Anmeldetag: 28.01.2000
(51) Int. Cl.: G02B 6/38

(54) **KOPPLUNGSHÜLSE MIT ABSCHIRMBLECH**
COUPLING SLEEVE WITH SHIELDING PLATE
MANCHON DE COUPLAGE COMPORTANT UNE PLAQUE DE PROTECTION

(30) Priorität: 02.02.1999 DE 19905240
(43) Veröffentlichungstag der Anmeldung: 31.10.2001
(73) Patentinhaber: Infineon Technologies AG, 81669 München (DE); Weigel, Hans-Dieter, 10405 Berlin (DE)
(72) Erfinder: KÜHNE, Wolfgang, D-13409 Berlin (DE)
(74) Vertreter: Müller, Wolfram Hubertus, Dr. Dipl.-Phys.
(86) Internationale Anmeldenummer: DE0000333
(87) Internationale Veröffentlichungsnummer: WO0046623

(56) Entgegenhaltungen:
- EP-A- 0 689 069
- EP-B- 0 582 675
- WO-A-98/52080
- DE-C- 19 530 684

## Beschreibung

Die Erfindung liegt auf dem Gebiet lösbarer optischer Verbindungen zwischen zwei Kopplungspartnern. Die Kopplungspartner können beispielsweise als einzelne Steckverbinder ausgebildet sein und jeweils einen oder mehrere Lichtwellenleiter endseitig derart abschließen, daß die Lichtwellenleiter an einer zur optischen Kopplung mit ihrem gegenüberliegenden Kopplungspartner geeigneten Kopplungsstirnfläche enden. Im Rahmen der vorliegenden Erfindung ist unter einem Lichtwellenleiter ein zum Führen und Weiterleiten eines optischen Signals geeigneter Leiter zu verstehen, wie beispielsweise konfektionierte Lichtwellenleiterkabel, Lichtwellenleiterbändchen oder auch auf einem Substrat ausgebildete oder integrierte optische Leiter. Zumindest einer der Kopplungspartner kann aber auch von einem entsprechenden Anschlußstück beispielsweise eines optischen Senders oder Empfängers gebildet sein.

Die Erfindung betrifft eine Kopplungshülse mit einem Hülsenkörper mit einer Durchgangsöffnung zur beidendigen Aufnahme je eines Kopplungspartners.

Derartige Kopplungshülsen sind sowohl für einzelne Steckverbinder, die je ein einziges Lichtwellenleiterende abschließen (EP 0 582 675 B1), als auch für Steckverbinder, die jeweils mehrere Lichtwellenleiterenden kopplungsfähig aufnehmen und abschließen (EP 0 712 015 A2), bekannt. Um die gewünschte optische Verbindung vorzunehmen, wird von jedem Ende der Durchgangsöffnung je ein Kopplungspartner eingeführt, so daß sich die Kopplungspartner in dem Hülsenkörper mit ihren Stirnseiten gegenüberstehen. Häufig sind die Hülsenkörper an einer Trennwand oder auch an einer Rückwand eines Gehäuses angebracht, das weitere elektronische Komponenten enthält. Diese Komponenten müssen im Interesse eines störungsfreien Betriebes auch bei hochfrequenten Datenübertragungen vor externen elektromagnetischen Störeinflüssen geschützt werden; außerdem muß der Austritt elektromagnetischer Störungen aus dem Gehäuse verhindert werden. Insoweit bilden die Hülsenkörper bzw. ihre öffnungen in der jeweiligen Wand schirmungstechnische Schwachstellen.

Die Druckschrift DE-C-195 30 684 beschreibt eine optische Kopplungsanordnung mit einem Flansch, der eine Aufnahmehülse zur Aufnahme eines Steckerstiftes ausbildet. In den Flansch ist ein unter anderem der elektromagnetischen Abschirmung diendendes Metallteil eingebettet, das einen Anschlag für den Steckerstift bildet und mindestens einen aus dem Flanschmaterial herausragenden Fortsatz aufweist. Die in der DE-C-195 30 684 beschriebene Kopplungsanordnung ermöglicht die Ankopplung lediglich eines optischen Steckverbinders.

Die Aufgabe die Erfindung besteht in der Schaffung einer Kopplungshülse, mit der zwei Steckverbinder miteinander koppelbar sind und die hohen Anforderungen an die elektromagnetische Abschirmung genügt.

Diese Aufgabe wird erfindungsgemäß bei einer Kopplungshülse der eingangs genannten Art gelöst durch ein elektrisch leitendes Abschirmblech mit einem Mantel, der zumindest einen Teil des Umfangs des Hülsenkörpers umgibt, wobei das Abschirmblech eine in die Durchgangsöffnung ragende Zunge mit einem Durchbruch aufweist, durch den ein Kopplungselement eines Steckverbinders steckbar ist.

Ein wesentlicher Vorteil der erfindungsgewäßen Kopplungshülse besteht darin, daß ohne wesentlichen zusätzlichen Aufwand und insbesondere ohne zusätzlichen Platzbedarf eine Kopplungshülse geschaffen ist, die bei hoher Qualität der elektromagnetischen Abschirmung eine Kopplung der Kopplungspartner gewährleisten kann. Durch das in die Kopplungshülse integrierte Abschirmblech liegt ein einteiliges und einfach zu handhabendes Bauteil vor. Dabei ist die Öffnung oder der Durchbruch in der Zunge bevorzugt genau auf die lichte Weite des Querschnitts zumindest eines der Kopplungspartner bemessen, so daß die Durchgangsöffnung dann eine auf das absolute Minimum reduzierte schirmungstechnische Schwachstelle aufweist. In gekoppeltem Zustand ist der Durchbruch dann nämlich vollständig von dem jeweiligen Kopplungspartner ausgefüllt.

Unter dem Begriff Abschirmblech ist im Rahmen der vorliegenden Erfindung allgemein ein elektrisch leitendes flaches Material zu verstehen, das z. B. von einem Kunststoffträger mit galvanisch beschichteter Oberfläche gebildet sein kann.

Um eine einfache Kontaktierung des Abschirmbleches mit einem gewünschten Abschirmpotential zu ermöglichen, sieht eine bevorzugte Weiterbildung der Erfindung vor, daß das Abschirmblech zumindest eine Anschlußlasche aufweist, die sich außerhalb des Hülsenkörpers erstreckt.

Eine montagetechnisch bevorzugte Fortbildung der Erfindung besteht darin, daß der Mantel des Abschirmblechs seitliche federnde Rastlaschen aufweist.

Weiter ist bevorzugt vorgesehen, daß die Zunge, die zumindest eine Anschlußlasche und die Rastlaschen integrale Bestandteile eines einzigen Abschirmblechs sind. Hierdurch bildet das Abschirmblech ein einfach zu handhabende Einheit.

Ein Ausführungsbeispiel der Erfindung wird nachfolgend anhand einer Zeichnung weiter erläutert. Es zeigen:
- Figur 1: eine stark vergrößerte perspektivische Ansicht einer erfindungsgemäßen Kopplungshülse von einer Einsteckseite aus und
- Figur 2: eine perspektivische Ansicht der Kopplungshülse von der Seite.

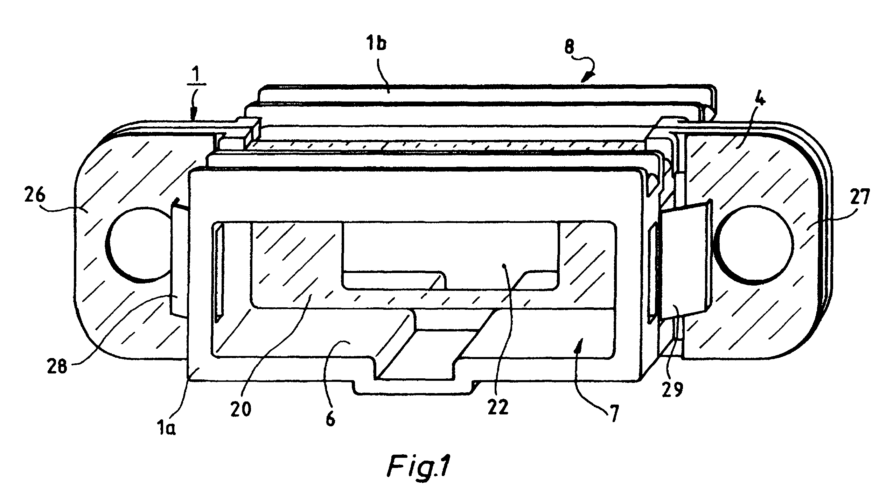

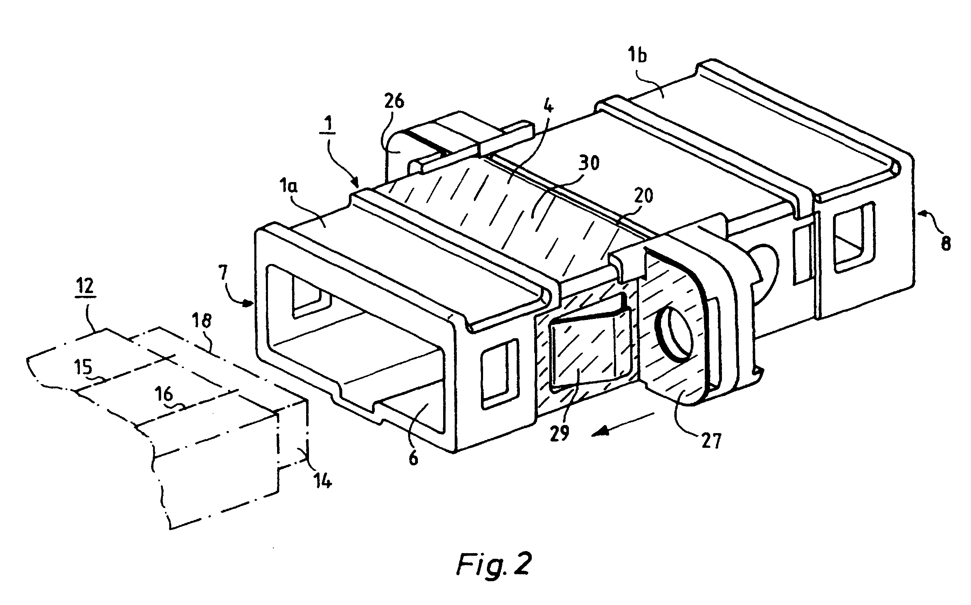

Die in den Figuren 1 und 2 gezeigte Kopplungshülse hat einen Hülsenkörper 1, der von zwei im wesentlichen spiegelsymmetrischen Hülsenkörperhälften oder Hülsenkörperteilen 1a, 1b zusammengesetzt sein kann. Zwischen den Hülsenkörperhälften 1a, 1b ist ein elektrisch leitendes Abschirmblech 4 angeordnet, das nur zur besseren Darstellung leicht schraffiert dargestellt ist. Der Hülsenkörper weist eine Durchgangsöffnung 6 auf, die sich vom vorderen Ende 7 des Hülsenkörpers bis zum hinteren Ende 8 des Hülsenkörpers 1 erstreckt. In jedes Ende 7, 8 ist je ein Kopplungspartner einführbar. In Figur 2 ist nur einer der Kopplungspartner 12 dargastellt, der von einem an sich bekannten Steckverbinder gebildet sein kann. Der Steckverbinder kann einen sogenannten MT-Steckerstift 14 (MT-Ferrule) als Kopplungselement enthalten, wie er beispielsweise aus "Lightwave", November 1997, Seiten 61 bis 67 hervorgeht. Der Steckerstift 14 schließt die nur andeutungsweise dargestellten Lichtwellenleiter 15, 16 an seiner Stirnfläche 18 kopplungsbereit ab.

Wie Figur 1 verdeutlicht, ist eine Zunge 20 Bestandteil des Abschirmblechs 4 und im wesentlichen senkrecht zur Durchgangsöffnung 6 abgewinkelt. Die Zunge 20 weist einen Durchbruch oder eine Öffnung 22 auf, die in ihrer lichten Weite auf den Querschnitt des frontseitigen Bereichs (Steckerstift 14) des Kopplungspartners 12 bemessen ist. Bei eingeführtem Kopplungspartner 12 ist somit die Öffnung 22 vollständig von dem Steckerstift 14 ausgefüllt.

Das elektrisch leitende Abschirmblech 4 erstreckt sich an beiden des Hülsenkörpers 1 aus dem Hülsenkörper heraus und weist je eine Anschlußlasche 26, 27 auf. Über die Anschlußlaschen 26, 27 kann das Abschirmblech 4 z.B. durch Schraubverbindung elektrisch auf das gewünschte Abschirmpotential gelegt werden. Ferner weist das Abschirmblech 4 seitlich federnde Rastlaschen 28, 29 auf, mit denen die Kopplungshülse in einer entsprechenden Ausnehmung (beispielsweise in einer Geräterückwand) verrasten kann. Dazu werden die federnden Rastlaschen beim Einstecken der Kopplungshülse 1 in eine in Figur 2 nicht gezeigte Öffnung z.B. einer Rückwand zunächst zur Durchgangsöffnung 6 hin zusammengedrückt, um dann hinter dem Rand der Rückwandöffnung wieder aufzufedern. Wie Figur 2 zeigt, weist das Abschirmblech einen Mantel 30 auf, der zumindest einen Teil des Umfangs des Hülsenkörpers 1 umgibt und damit für eine vollständige periphere Abschirmung sorgt. Die wesentlichen vorbeschriebenen Bestandteile des Abschirmblechs 4, nämlich die annähernd rechtwinklig abgebogene Zunge 20, die Anschlußlaschen 26, 27 und die Rastlaschen 28, 29 sind vorteilhafter Weise integrale Bestandteile eines einzigen Bleches, so daß nur ein einziges der Schirmung und ggf. der Montage dienendes Zusatzbauteil erforderlich ist. Das mit den Hälften 1a und 1b verbundene Abschirmblech 4 bildet eine einfach und gemeinsam zu handhabende Einheit.

Es ist auch denkbar, zwei (oder mehr) erfindungsgemäße Kopplungshülsen nebeneinander anzuordnen, so daß z. B. auch Duplex-Steckverbinder koppelbar sind.

## Patentansprüche

1. Kopplungshülse mit:
- einem Hülsenkörper (1) mit einer Durchgangsöffnung (6) zur beidendigen Aufnahme je eines Steckverbinders (12),
**gekennzeichnet durch**
- ein mit dem Hülsenkörper verbundenes elektrisch leitendes Abschirmblech (4) mit einem Mantel (30), der zumindest einen Teil des Umfangs des Hülsenkörpers (1) umgibt, wobei das Abschirmblech eine in die Durchgangsöffnung (6) ragende Zunge (20) mit einem Durchbruch (22) aufweist, **durch** den ein Kopplungselement (14) eines der Steckverbinder (12) steckbar ist.

2. Kopplungshülse nach Anspruch 1,
**dadurch gekennzeichnet, daß**
- das Abschirmblech (4) zumindest eine Anschlußlasche (26, 27) aufweist, die sich außerhalb des Hülsenkörpers (1) erstreckt.

3. Kopplungshülse nach Anspruch 1 oder 2,
**dadurch gekennzeichnet, daß**
- das der Mantel des Abschirmblechs (4) seitliche federnde Rastlaschen (28, 29) aufweist.

4. Kopplungshülse nach Anspruch 3,
**dadurch gekennzeichnet, daß**
- das die Zunge (20), die zumindest eine Anschlußlasche (26, 27) und die Rastlaschen (28, 29) integrale Bestandteile eines einzigen Blechs sind.

## Claims

1. Coupling sleeve having:
- a sleeve body (1) with a through-opening (6) to accommodate a plug connector (12) at each of the two ends,
**characterized by**
- an electrically conductive screening plate (4) which is connected to the sleeve body and has a casing (30) which surrounds at least a part of the circumference of the sleeve body (1), in which the screening plate has a tongue (20) which projects into the through-opening (6) and has an aperture (22) through which a coupling element (14) of one of the plug connectors (12) can be passed.

2. Coupling sleeve according to Claim 1,
**characterized in that**
- the screening plate (1) has at least one connecting lug (26, 27), which extends outside the sleeve body (1).

3. Coupling sleeve according to Claim 1 or 2,
**characterized in that**
- the casing of the screening plate (4) has side, sprung latching lugs (28, 29).

4. Coupling sleeve according to Claim 3,
**characterized in that**
- the tongue (20), the at least one connecting lug (26, 27) and the latching lugs (28, 29) are integral components of a single plate.

## Revendications

1. Manchon de couplage comportant :
- un corps de manchon (1) ayant une ouverture de passage (6) destinée à recevoir à chacun des deux côtés un connecteur (12)
**caractérisé par**
- une tôle de protection électroconductrice (4), liée au corps de manchon, comportant une enveloppe (30) qui entoure au moins une partie du périmètre du corps de manchon (1), la tôle de protection présentant une lame (20) qui fait saillie dans l'ouverture de passage (6) et ayant un passage (22) dans lequel un élément de couplage (14) d'un des connecteurs (12) peut être enfiché.

2. Manchon de couplage selon la revendication 1
**caractérisé en ce que**
- la tôle de protection (4) présente au moins un collier de raccord (26, 27) qui s'étend en-dehors du corps de manchon (1).

3. Manchon de couplage selon la revendication 1 ou 2
**caractérisé en ce que**
- l'enveloppe de la tôle de protection (4) présente des barres d'arrêt (28, 29) latérales élastiques.

4. Manchon de couplage selon la revendication 3
**caractérisé en ce que**
- la lame (20), ledit au moins un collier de raccord (26, 27) et les barres d'arrêt (28, 29) sont des composants intégrés d'une seule tôle.
